# EUROPEAN PATENT APPLICATION

(11) **EP 3 340 733 A1**
(43) Date of publication of application: **27.06.2018**
(21) Application number: 15903815.7
(22) Date of filing: 15.09.2015
(51) Int. Cl.: H04W 80/12

(54) **METHOD AND DEVICE FOR RECEIVING AND SENDING APPLICATION LAYER PARAMETER INFORMATION**

(71) Applicant: Huawei Technologies Co., Ltd., Longgang District Shenzhen, Guangdong 518129 (CN)
(72) Inventor: BI, Hao, Shenzen Guangdong 518129 (CN); LIU, Jing, Shenzen Guangdong 518129 (CN); HUANG, Min, Shenzen Guangdong 518129 (CN)
(74) Representative: Pfenning, Meinig & Partner mbB
(86) International application number: PCT/CN2015/089619
(87) International publication number: WO 2017/045124

(57) **Abstract**

Embodiments of the present invention disclose a method for sending application layer parameter information, a method for receiving application layer parameter information, and a device. In the embodiments of the present invention, UE includes a RAC module and a sending module. The RAC module is located at an application layer, an operating system layer, or a baseband layer of the UE. The RAC module is configured to obtain first information, where the first information includes application layer parameter information of the user equipment UE. The sending module is configured to send the first information obtained by the RAC module to the network-side device by using radio resource control RRC signaling or a data radio bearer DRB corresponding to an air interface. According to the embodiments of the present invention, application layer parameter information is exchanged between a network-side device and an upper layer of UE, so that the network-side device obtains an application layer parameter of a user equipment side, and performs adjustment or an operation correspondingly. This improves user experience.

## Description

### TECHNICAL FIELD

The present invention relates to the field of communications technologies, and in particular, to a method for sending application layer parameter information, a method for receiving application layer parameter information, and a device.

### BACKGROUND

A Long Term Evolution (Long Term Evolution, LTE) system is long term evolution of Universal Mobile Telecommunications System (Universal Mobile Telecommunications System, UMTS) technical standards, and is developed by the 3rd Generation Partnership Project (The 3rd Generation Partnership Project, 3GPP) organization.

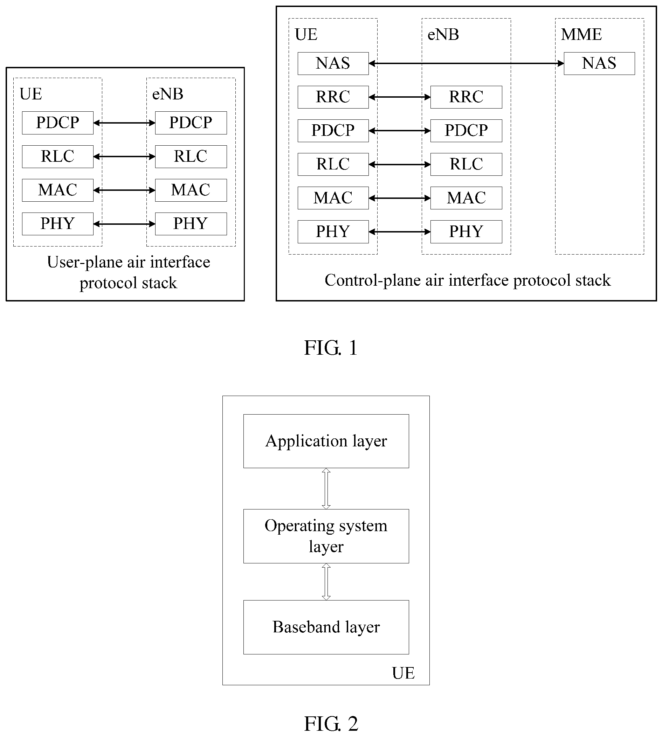

As shown in FIG. 1, an LTE air interface protocol stack architecture is categorized into a control-plane air interface protocol architecture and a user-plane air interface protocol architecture according to directions of a data flow and a signaling flow in an LTE network architecture. At present, in an LTE system, a user-plane air interface protocol stack between user equipment (User Equipment, UE) and an evolved NodeB (Evolved Node-B, eNB) implements Packet Data Convergence Protocol (Packet Data Convergence Protocol, PDCP) layer processing at most, and a control-plane air interface protocol stack implements radio resource control (Radio Resource Control, RRC) layer processing at most. Therefore, in the prior art, upper layer (a transport layer and/or an application layer) information exchange cannot be implemented between the eNB and the UE.

### SUMMARY

Embodiments of the present invention provide a method for sending application layer parameter information, a method for receiving application layer parameter information, and a device, to exchange application layer parameter information between a network-side device and an upper layer of UE, so that the network-side device obtains an application layer parameter of a user equipment side, and performs adjustment or an operation correspondingly. This improves user experience.

A first aspect of the embodiments of the present invention provides user equipment, including a radio-access-network access communication RAC module and a sending module, where the RAC module is located at an application layer, an operating system layer, or a baseband layer of the UE;
the RAC module is configured to obtain first information, where the first information includes application layer parameter information of the user equipment UE; and
the sending module is configured to send the first information obtained by the RAC module to the network-side device by using radio resource control RRC signaling or a data radio bearer DRB corresponding to an air interface.

With reference to the first aspect of the embodiments of the present invention, in a first possible implementation of the first aspect of the embodiments of the present invention,
the RAC module is located at the application layer; and
the sending module is specifically configured to: transfer, by using the RAC module, the first information to the operating system layer through an application programming interface API between the application layer and the operating system layer; transfer, at the operating system layer, the first information to the baseband layer by using an AT command or a data channel; and send the first information from the baseband layer to the network-side device by using the RRC signaling or the DRB corresponding to the air interface.

With reference to the first possible implementation of the first aspect of the embodiments of the present invention, in a second possible implementation of the first aspect of the embodiments of the present invention,
the sending module is specifically configured to: transfer, at the operating system layer, the first information on which Transmission Control Protocol/Internet Protocol TCP/IP processing has been performed to the baseband layer by using the data channel; and send the first information from the baseband layer to the network-side device by using the DRB corresponding to the air interface.

With reference to the first possible implementation of the first aspect of the embodiments of the present invention, in a third possible implementation of the first aspect of the embodiments of the present invention,
the baseband layer includes a TCP proxy module; and
the sending module is specifically configured to: transfer, at the operating system layer, the first information on which TCP/IP protocol processing has been performed to the TCP proxy module by using the data channel; restore, at the baseband layer, the first information by using the TCP proxy module; and send the first information from the baseband layer to the network-side device by using the RRC signaling.

With reference to the first possible implementation of the first aspect of the embodiments of the present invention, in a fourth possible implementation of the first aspect of the embodiments of the present invention,
the sending module is specifically configured to: transfer, at the operating system layer, the first information on which User Datagram Protocol/Internet Protocol UDP/IP processing has been performed to the baseband layer by using the data channel; and multicast the first information from the baseband layer to the network-side device by using the DRB corresponding to the air interface.

With reference to the first possible implementation of the first aspect of the embodiments of the present invention, in a fifth possible implementation of the first aspect of the embodiments of the present invention,
the baseband layer includes a UDP proxy module; and
the sending module is specifically configured to: transfer, at the operating system layer, the first information on which UDP/IP protocol processing has been performed to the UDP proxy module by using the data channel; restore, at the baseband layer, the first information by using the UDP proxy module; and send the first information from the baseband layer to the network-side device by using the RRC signaling.

With reference to the first possible implementation of the first aspect of the embodiments of the present invention, in a sixth possible implementation of the first aspect of the embodiments of the present invention,
the sending module is specifically configured to: transfer, at the operating system layer, the first information to the baseband layer by using the AT command; and send the first information from the baseband layer to the network-side device by using the RRC signaling.

With reference to any one of the first aspect, or the first to the sixth possible implementations of the first aspect of the embodiments of the present invention, in a seventh possible implementation of the first aspect of the embodiments of the present invention,
a RAC module is embedded into each application at the application layer in a software manner, where the RAC module is configured to obtain parameter information of the corresponding application; or
the RAC module is an independent application module at the application layer, and is configured to obtain parameter information of all applications at the application layer.

With reference to the first aspect of the embodiments of the present invention, in an eighth possible implementation of the first aspect of the embodiments of the present invention,
the RAC module is located at the operating system layer;
the RAC module is specifically configured to obtain the first information from the application layer by using the API interface; and
the sending module is specifically configured to: transfer, at the operating system layer, the first information to the baseband layer by using a data channel; and send the first information from the baseband layer to the network-side device by using the DRB corresponding to the air interface.

With reference to the first aspect of the embodiments of the present invention, in a ninth possible implementation of the first aspect of the embodiments of the present invention,
the RAC module is located at the operating system layer;
the RAC module is specifically configured to obtain the first information from the application layer by using the API interface; and
the sending module is specifically configured to: transfer, at the operating system layer, the first information to the baseband layer by using an AT command; and send the first information from the baseband layer to the network-side device by using the RRC signaling.

With reference to the first aspect of the embodiments of the present invention, in a tenth possible implementation of the first aspect of the embodiments of the present invention,
the RAC module is located at the baseband layer;
the RAC module is configured to obtain the first information from the application layer by using a cross-layer interface between the application layer and the baseband layer, where the cross-layer interface is used for direct data exchange between the baseband layer and the application layer; or
the operating system layer obtains the first information from the application layer by using the API interface, and
the RAC module is specifically configured to obtain the first information from the operating system layer by using an AT command; and
the sending module is specifically configured to send, at the baseband layer, the first information to the network-side device by using the RRC signaling.

With reference to any one of the first aspect, or the first to the tenth possible implementations of the first aspect of the embodiments of the present invention, in an eleventh possible implementation of the first aspect of the embodiments of the present invention,
the RAC module is further configured to obtain transport layer parameter information of the UE; and
the first information further includes the transport layer parameter information of the UE.

With reference to any one of the first aspect, or the first to the eleventh possible implementations of the first aspect of the embodiments of the present invention, in a twelfth possible implementation of the first aspect of the embodiments of the present invention,
the user equipment further includes:
a receiving module, configured to receive adjusted application layer parameter information sent by the network-side device; and
an adjustment module, configured to adjust an application operation of the UE according to the adjusted application layer parameter information.

A second aspect of the embodiments of the present invention provides a network-side device, including:
an obtaining module, configured to obtain first information from UE by using RRC signaling or a DRB bearer, where the first information includes application layer parameter information of the UE;
a RAC module, configured to parse the first information; and
a processing module, configured to: adjust the parsed first information according to a current network status to obtain adjusted application layer parameter information, and feed back the adjusted application layer parameter information to the UE by using RRC signaling or a DRB; or perform an application operation by using the first information.

With reference to the second aspect of the embodiments of the present invention, in a first possible implementation of the second aspect of the embodiments of the present invention,
the network-side device is a base station or a mobile edge computing MEC entity.

A third aspect of the embodiments of the present invention provides a method for sending application layer parameter information, including:
obtaining, by the UE, first information, where the first information includes application layer parameter information of the UE; and
sending, by the UE, the first information to the network-side device by using RRC signaling or a DRB.

With reference to the third aspect of the embodiments of the present invention, in a first possible implementation of the third aspect of the embodiments of the present invention,
the UE includes a radio-access-network access communication RAC module, the RAC module is located at an application layer, an operating system layer, or a baseband layer of the UE, and the RAC module is configured to obtain the first information.

With reference to the first possible implementation of the third aspect of the embodiments of the present invention, in a second possible implementation of the third aspect of the embodiments of the present invention,
the RAC module is located at the application layer; and
the sending, by the UE, the first information to the network-side device includes:
transferring, by the UE by using the RAC module, the first information to the operating system layer through an API interface between the application layer and the operating system layer; and
transferring, by the UE at the operating system layer, the first information to the baseband layer by using an AT command or a data channel; and sending the first information from the baseband layer to the network-side device by using the RRC signaling or a DRB corresponding to an air interface.

With reference to the second possible implementation of the third aspect of the embodiments of the present invention, in a third possible implementation of the third aspect of the embodiments of the present invention,
the transferring, by the UE at the operating system layer, the first information to the baseband layer by using an AT command or a data channel; and sending the first information from the baseband layer to the network-side device includes:
transferring, by the UE at the operating system layer, the first information on which Transmission Control Protocol/Internet Protocol TCP/IP processing has been performed to the baseband layer by using the data channel; and sending the first information from the baseband layer to the network-side device by using the DRB corresponding to the air interface.

With reference to the second possible implementation of the third aspect of the embodiments of the present invention, in a fourth possible implementation of the third aspect of the embodiments of the present invention,
the baseband layer includes a TCP proxy module; and
the transferring, by the UE at the operating system layer, the first information to the baseband layer by using an AT command or a data channel; and sending the first information from the baseband layer to the network-side device includes:
transferring, by the UE at the operating system layer, the first information on which TCP/IP protocol processing has been performed to the TCP proxy module by using the data channel; and
restoring, by the UE at the baseband layer, the first information by using the TCP proxy module; and sending the first information from the baseband layer to the network-side device by using the RRC signaling.

With reference to the second possible implementation of the third aspect of the embodiments of the present invention, in a fifth possible implementation of the third aspect of the embodiments of the present invention,
the transferring, by the UE at the operating system layer, the first information to the baseband layer by using an AT command or a data channel; and sending the first information from the baseband layer to the network-side device includes:
transferring, by the UE at the operating system layer, the first information on which User Datagram Protocol/Internet Protocol UDP/IP processing has been performed to the baseband layer by using the data channel; and multicasting the first information from the baseband layer to the network-side device by using the DRB corresponding to the air interface.

With reference to the second possible implementation of the third aspect of the embodiments of the present invention, in a sixth possible implementation of the third aspect of the embodiments of the present invention,
the baseband layer includes a UDP proxy module; and
the transferring, by the UE at the operating system layer, the first information to the baseband layer by using an AT command or a data channel; and sending the first information from the baseband layer to the network-side device includes:
transferring, by the UE at the operating system layer, the first information on which UDP/IP protocol processing has been performed to the UDP proxy module by using the data channel; and
restoring, by the UE at the baseband layer, the first information by using the UDP proxy module; and sending the first information from the baseband layer to the network-side device by using the RRC signaling.

With reference to the second possible implementation of the third aspect of the embodiments of the present invention, in a seventh possible implementation of the third aspect of the embodiments of the present invention,
the transferring, by the UE at the operating system layer, the first information to the baseband layer by using an AT command or a data channel; and sending the first information from the baseband layer to the network-side device includes:
transferring, by the UE at the operating system layer, the first information to the baseband layer by using the AT command; and sending the first information from the baseband layer to the network-side device by using the RRC signaling.

With reference to the first possible implementation of the third aspect of the embodiments of the present invention, in an eighth possible implementation of the third aspect of the embodiments of the present invention,
the RAC module is located at the operating system layer;
the obtaining, by the UE, the first information by using the RAC module includes:
obtaining, by the RAC module, the first information from the application layer by using the API interface; and
the sending, by the UE, the first information to the network-side device includes:
   transferring, by the UE at the operating system layer, the first information to the baseband layer by using a data channel; and sending the first information from the baseband layer to the network-side device by using a DRB corresponding to an air interface.

With reference to the first possible implementation of the third aspect of the embodiments of the present invention, in a ninth possible implementation of the third aspect of the embodiments of the present invention,
the RAC module is located at the operating system layer;
the obtaining, by the UE, the first information by using the RAC module includes:
obtaining, by the RAC module, the first information from the application layer by using the API interface; and
the sending, by the UE, the first information to the network-side device includes:
   transferring, by the UE at the operating system layer, the first information to the baseband layer by using an AT command; and sending the first information from the baseband layer to the network-side device by using the RRC signaling.

With reference to the first possible implementation of the third aspect of the embodiments of the present invention, in a tenth possible implementation of the third aspect of the embodiments of the present invention,
the RAC module is located at the baseband layer;
the obtaining, by the UE, the first information by using the RAC module includes:
obtaining, by the RAC module, the first information from the application layer by using a cross-layer interface between the application layer and the baseband layer, where the cross-layer interface is used for direct data exchange between the baseband layer and the application layer; or
the obtaining, by the UE, the first information by using the RAC module includes:
   obtaining, by the UE at the operating system layer, the first information from the application layer by using the API interface, and
   obtaining, by the RAC module, the first information from the operating system layer by using an AT command; and
the sending, by the UE, the first information to the network-side device includes:
   sending, by the UE at the baseband layer, the first information to the network-side device by using the RRC signaling.

With reference to any one of the third aspect, or the first to the tenth possible implementations of the third aspect of the embodiments of the present invention, in an eleventh possible implementation of the third aspect of the embodiments of the present invention,
the RAC module is further configured to obtain transport layer parameter information of the UE; and
the first information further includes the transport layer parameter information of the UE.

With reference to any one of the first possible implementation of the third aspect to the eleventh possible implementation of the third aspect of the embodiments of the present invention, in a twelfth possible implementation of the third aspect of the embodiments of the present invention,
the method further includes:
receiving, by the UE, adjusted application layer parameter information sent by the network-side device; and
adjusting, by the UE, an application operation of the UE according to the adjusted application layer parameter information.

A fourth aspect of the embodiments of the present invention provides a method for receiving application layer parameter information, including:
obtaining, by the network-side device, first information from UE by using RRC signaling or a DRB, where the first information includes application layer parameter information of the UE;
parsing, by the network-side device, the first information; and
adjusting, by the network-side device, the parsed first information according to a current network status to obtain adjusted application layer parameter information, and feeding back the adjusted application layer parameter information to the UE; or performing, by the network-side device, an application operation by using the first information.

With reference to the fourth aspect of the embodiments of the present invention, in a first possible implementation of the fourth aspect of the embodiments of the present invention,
the network-side device includes a RAC module, where the RAC module is configured to parse the first information.

A fifth aspect of the embodiments of the present invention provides a communications system, including user equipment, a master eNodeB, and a secondary eNodeB, where the master eNodeB and the secondary eNodeB are able to simultaneously serve the user equipment, and there is an X2 interface between the master eNodeB and the secondary eNodeB, used for exchanging signaling and data;
the user equipment is the user equipment according to any one of the first aspect;
the master eNodeB obtains first information that is sent by using RRC signaling or a DRB by the user equipment, and sends the first information to the secondary eNodeB by using the X2 interface; and
the secondary eNodeB adjusts the first information according to a current network status to obtain adjusted application parameter information, and sends the adjusted application parameter information to the master eNodeB by using the X2 interface, and
the master eNodeB feeds back the adjusted application parameter information to the UE by using RRC signaling or a DRB; or
the secondary eNodeB performs an application operation by using the first information.

It can be learned from the foregoing technical solutions that the embodiments of the present invention have the following advantages:

According to the embodiments of the present invention, the radio-access-network communication RAC module is disposed at the application layer, the operating system layer, or the baseband layer of the user equipment, to obtain an application layer parameter of the UE, and the obtained application layer parameter is sent to the network-side device by using the RRC signaling or the DRB corresponding to the air interface, so that the network-side device performs processing or an operation according to the application layer parameter. According to the embodiments of the present invention, application layer parameter information is exchanged between a network-side device and an upper layer of UE, so that the network-side device obtains an application layer parameter of a user equipment side, and performs adjustment or an operation correspondingly. This improves user experience.

### BRIEF DESCRIPTION OF DRAWINGS

FIG. 1 is a schematic diagram of architectures of two types of air interface protocol stacks;
FIG. 2 is a schematic structural diagram of UE according to an embodiment of the present invention;
FIG. 3-1 is a schematic diagram of an embodiment of UE according to embodiments of the present invention;
FIG. 3-2 is a schematic diagram of an embodiment of UE interacting with a network-side device according to the embodiments of the present invention;
FIG. 3-3 is a schematic diagram of another embodiment of UE interacting with a network-side device according to the embodiments of the present invention;

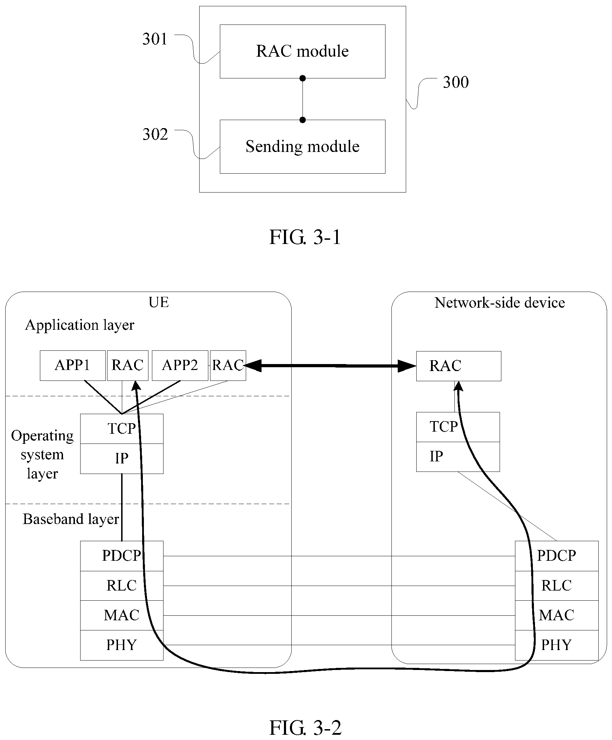

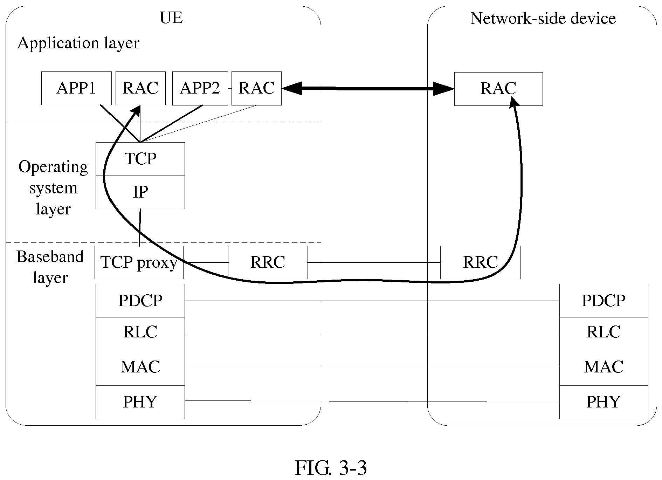

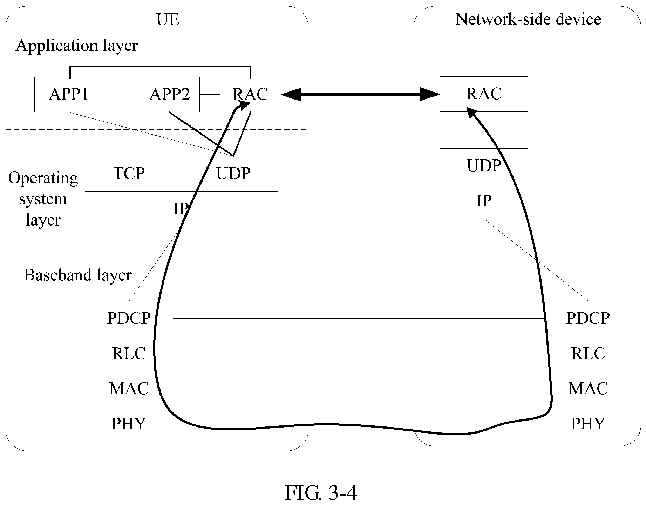

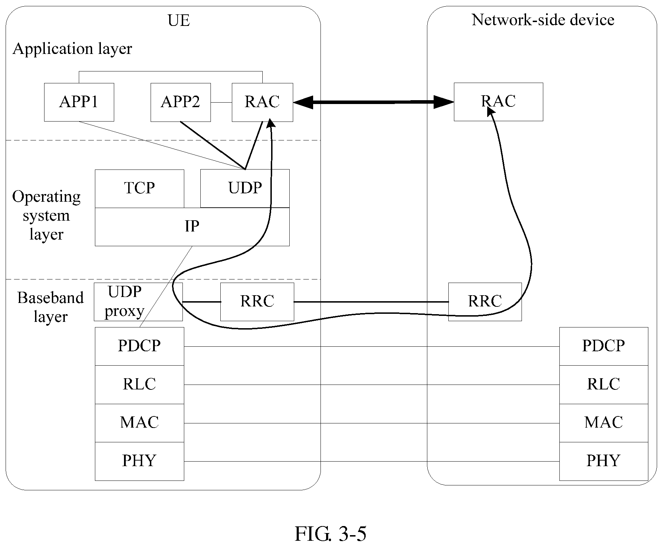

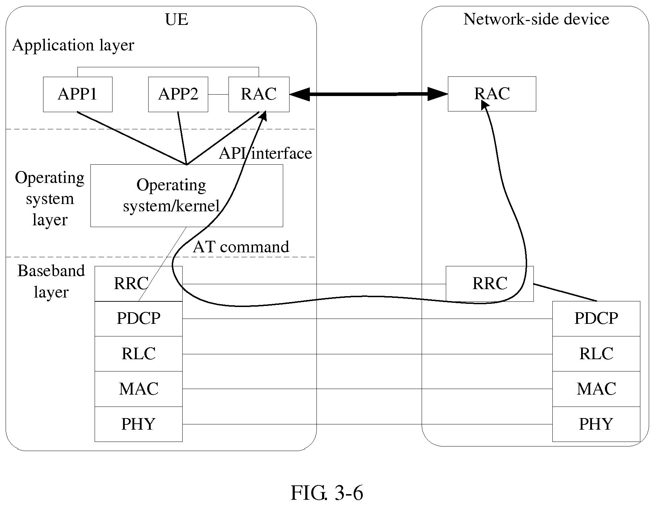

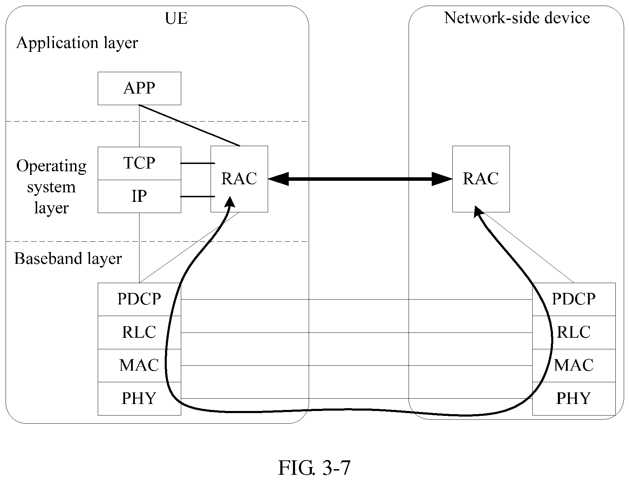

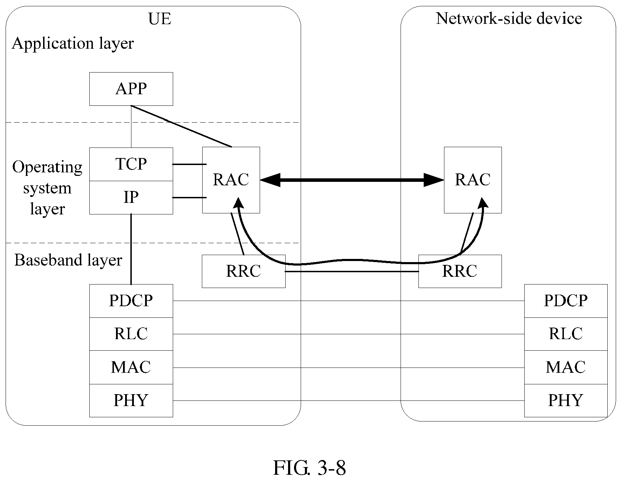

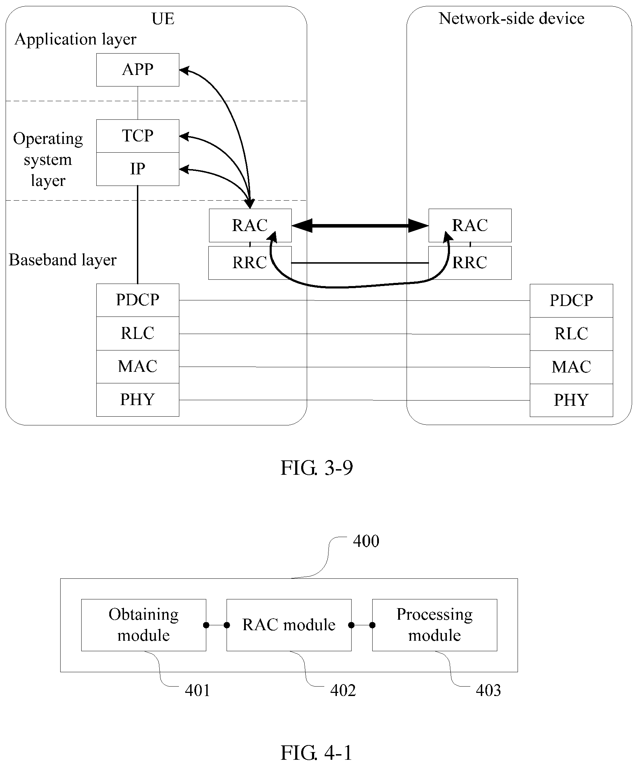

FIG. 3-4 is a schematic diagram of another embodiment of UE interacting with a network-side device according to the embodiments of the present invention;
FIG. 3-5 is a schematic diagram of another embodiment of UE interacting with a network-side device according to the embodiments of the present invention;
FIG. 3-6 is a schematic diagram of another embodiment of UE interacting with a network-side device according to the embodiments of the present invention;
FIG. 3-7 is a schematic diagram of another embodiment of UE interacting with a network-side device according to the embodiments of the present invention;
FIG. 3-8 is a schematic diagram of another embodiment of UE interacting with a network-side device according to the embodiments of the present invention;
FIG. 3-9 is a schematic diagram of another embodiment of UE interacting with a network-side device according to the embodiments of the present invention;
FIG. 4-1 is a schematic diagram of an embodiment of a network-side device according to the embodiments of the present invention;

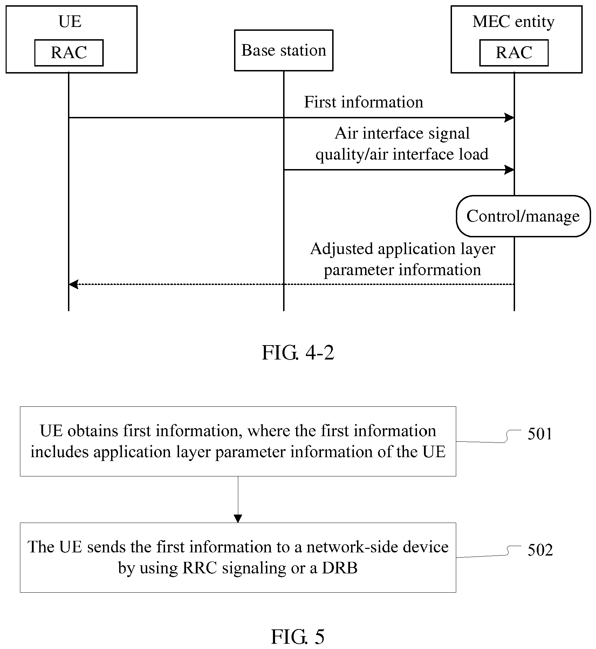

FIG. 4-2 is a schematic diagram of an embodiment in which a network-side device is a MEC entity according to the embodiments of the present invention;
FIG. 5 is a schematic diagram of a method for sending application layer parameter information according to an embodiment of the present invention;

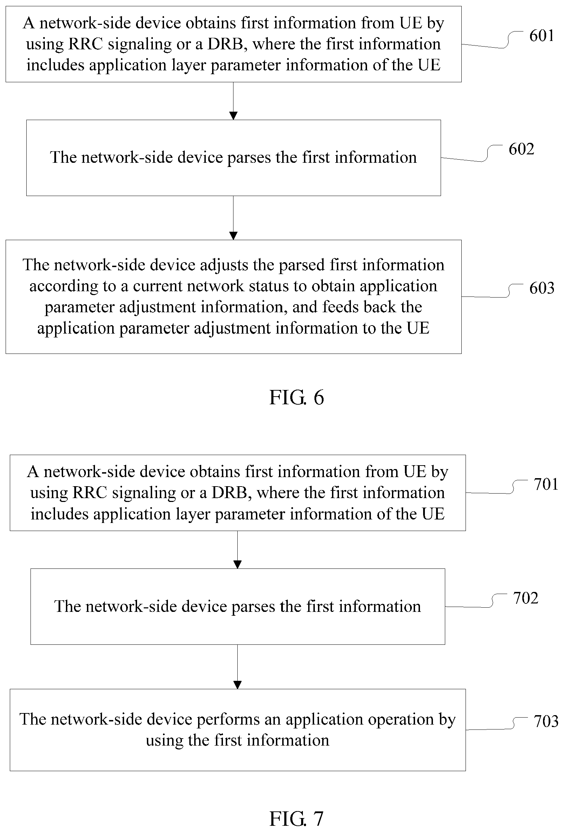

FIG. 6 is a schematic diagram of a method for receiving application layer parameter information according to an embodiment of the present invention; and
FIG. 7 is another schematic diagram of a method for receiving application layer parameter information according to an embodiment of the present invention.

### DESCRIPTION OF EMBODIMENTS

The embodiments of the present invention provide a method for sending application layer parameter information, a method for receiving application layer parameter information, and a device, to exchange application layer parameter information between a network-side device and an upper layer of UE, so that the network-side device obtains an application layer parameter of a user equipment side, and performs adjustment or an operation correspondingly. This improves user experience.

To make a person skilled in the art understand the technical solutions in the present invention better, the following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

In the specification, claims, and accompanying drawings of the present invention, the terms "first", "second", and so on (if they exist) are intended to distinguish between similar objects but do not necessarily indicate a specific order or sequence. It should be understood that the data termed in such a way are interchangeable in proper circumstances so that the embodiments described herein can be implemented in an order other than the order illustrated or described herein. Moreover, the terms "include", "contain", and any other variants mean to cover the non-exclusive inclusion, for example, a process, method, system, product, or device that includes a list of steps or units is not necessarily limited to those steps or units, but may include other steps or units not expressly listed or inherent to such a process, method, system, product, or device.

The following first describes some elements that may be used in the embodiments of the present invention:
RRC (Radio Resource Control): radio resource control. UE and a network-side device may interact with each other at an RRC layer by using RRC signaling.

PDCP (Packet Data Convergence Protocol): Packet Data Convergence Protocol. At a PDCP layer, UE and a network-side device may perform IP header compression/decompression, and perform encryption/decryption and integrity protection on transmitted user data. Each radio bearer is corresponding to a PDCP entity.

RLC (Radio Link Control): Radio Link Control Layer protocol, responsible for segmentation and connection, retransmission processing, sequential transfer of higher layer data. The RLC layer serves a PDCP layer by using a radio bearer, and an RLC entity is configured for each radio bearer.

MAC: Media Access Control (Media Access Control, MAC) layer. The MAC layer serves an RLC layer by using a logical channel.

PHY physical layer: responsible for encoding and decoding, modulation and demodulation, multi-antenna mapping, and another telecommunication physical layer function. The physical layer serves a MAC layer by using a transport channel.

The following describes the embodiments of the present invention.

As shown in FIG. 1, an LTE air interface protocol stack architecture is categorized into a control-plane air interface protocol architecture and a user-plane air interface protocol architecture according to directions of a data flow and a signaling flow in an LTE network architecture.

In the embodiments of the present invention, a communications system includes user equipment and at least one network-side device. As shown in FIG. 2, the user equipment UE includes an application layer, an operating system layer, and a baseband layer. Information may be transferred between the application layer and the operating system layer by using an application programming interface (Application Programming Interface, API). Information may be transferred between the operating system layer and the baseband layer by using a data channel or an AT (Attention) instruction. The network-side device may be a base station, or the network-side device may be a mobile edge computing (Mobile-Edge Computing, MEC) entity. Generally, when exchanging information with the network-side device, the user equipment may exchange, at a radio resource control (Radio Resource Control, RRC) layer of the baseband layer, the information with the network-side device by using RRC signaling, or exchange the information with the network-side device by using a data radio bearer (Data Radio Bearer, DRB) of an air interface of the user equipment.

The following describes an embodiment of user equipment in the embodiments of the present invention.

Referring to FIG. 3-1, an embodiment of user equipment UE 300 in the embodiments of the present invention includes a radio-access-network access communication (Radio Access Network-Access-Communication) RAC module 301 and a sending module 302. The RAC module 301 is located at an application layer, an operating system layer, or a baseband layer of the UE.

The RAC module 301 is configured to obtain first information, and the first information includes application layer parameter information of the user equipment UE.

The sending module 302 is configured to send the first information obtained by the RAC module 301 to the network-side device by using radio resource control RRC signaling or a data radio bearer DRB corresponding to an air interface.

An application layer parameter is a parameter corresponding to an application at the application layer of the UE. For example, in a Voice over Internet Protocol (Voice over Internet Protocol, VoIP) application, the application layer parameter may be a VoIP service transmission rate, redundant information in a service packet (a first data packet includes service frames 1 and 2, a second data packet includes service frames 2 and 3, and the service frame 2 is redundant information because the service frame 2 is present in the two data packets), a size of a service packet (how many service frames are included in a data packet), or the like.

According to this embodiment of the present invention, the radio access communication RAC module is disposed at the application layer, the operating system layer, or the baseband layer of the user equipment, to obtain an application layer parameter of the UE, and the obtained application layer parameter is sent to the network-side device by using the RRC signaling or the DRB corresponding to the air interface, so that the network-side device performs processing or an operation according to the application layer parameter. According to this embodiment of the present invention, application layer parameter information of UE is exchanged between a network-side device and the UE, so that the network-side device can obtain an application layer parameter of a user equipment side, and perform adjustment or an operation correspondingly. This improves user experience.

In some embodiments of the present invention, the RAC module 301 is located at the application layer. Optionally, the RAC module 301 is disposed at the application layer in the following manners: A RAC module 301 may be embedded into each application at the application layer in a software manner, and the RAC module 301 is configured to obtain parameter information of the corresponding application. Certainly, the RAC module 301 may alternatively be an independent application module at the application layer, and may be configured to obtain parameter information of all applications at the application layer.

The sending module 302 is specifically configured to: transfer, by using the RAC module 301, the first information to the operating system layer through an application programming interface API at the application layer; transfer, at the operating system layer, the first information to the baseband layer by using an AT command or a data channel; and send the first information from the baseband layer to the network-side device by using the RRC signaling or the DRB corresponding to the air interface.

Optionally, the sending module 302 is specifically configured to: transfer, at the operating system layer, the first information on which Transmission Control Protocol/Internet Protocol TCP/IP processing has been performed to the baseband layer by using the data channel; and send the first information from the baseband layer to the network-side device by using the DRB corresponding to the air interface.

An implementation is shown in FIG. 3-2. In FIG. 3-2, a RAC module 301 is embedded into each application at the application layer in a software manner, and the RAC module 301 is configured to obtain corresponding application parameter information. In the figure, APP1 and APP2 each represent one application at the application layer. It should be noted that only two applications are used as an example in the figure, and no limitation is set herein. The sending module 302 is specifically configured to: transfer, by using the RAC module 301, the first information to the operating system layer through an application programming interface API at the application layer; transfer, at the operating system layer, the first information on which TCP/IP processing has been performed to the baseband layer by using the data channel; and send the first information from the baseband layer to the network-side device by using the DRB corresponding to the air interface.

Optionally, the baseband layer includes a TCP proxy module.

The sending module 302 is specifically configured to: transfer, at the operating system layer, the first information on which TCP/IP protocol processing has been performed to the TCP proxy module by using the data channel; restore, at the baseband layer, the first information by using the TCP proxy module; and send the first information from the baseband layer to the network-side device by using the RRC signaling.

An implementation is shown in FIG. 3-3. In FIG. 3-3, a RAC module 301 is embedded into each application at the application layer in a software manner, and the RAC module 301 is configured to obtain corresponding application parameter information. The sending module 302 is specifically configured to: transfer, by using the RAC module 301, the first information to the operating system layer through the application programming interface API; transfer, at the operating system layer, the first information on which TCP/IP processing has been performed to the TCP proxy module at the baseband layer by using the data channel; restore, at the baseband layer, the first information by using the TCP proxy module; and send the first information from the baseband layer to the network-side device by using the RRC signaling.

Optionally, the sending module 302 is specifically configured to: transfer, at the operating system layer, the first information on which User Datagram Protocol/Internet Protocol UDP/IP processing has been performed to the baseband layer by using the data channel; and multicast the first information from the baseband layer to the network-side device by using the DRB corresponding to the air interface.

An implementation is shown in FIG. 3-4. In FIG. 3-4, the RAC module 301 is an independent application module at the application layer, and is configured to obtain parameter information of all applications at the application layer. Similarly, in the figure, for example, there are only two applications at the application layer. The sending module 302 is specifically configured to: transfer, by using the RAC module, the first information to the operating system layer through an application programming interface API at the application layer; transfer, at the operating system layer, the first information on which user UDP/IP processing has been performed to the baseband layer by using the data channel; and multicast the first information from the baseband layer to the network-side device by using the DRB corresponding to the air interface.

Optionally, the baseband layer includes a UDP proxy module.

The sending module 302 is specifically configured to: transfer, at the operating system layer, the first information on which UDP/IP protocol processing has been performed to the UDP proxy module by using the data channel; restore, at the baseband layer, the first information by using the UDP proxy module; and send the first information from the baseband layer to the network-side device by using the RRC signaling.

An implementation is shown in FIG. 3-5. In FIG. 3-5, the RAC module 301 is an independent application module at the application layer, and is configured to obtain parameter information of all applications at the application layer. Similarly, in the figure, for example, there are only two applications at the application layer. The sending module 302 is specifically configured to: transfer, by using the RAC module, the first information to the operating system layer through an application programming interface API at the application layer; transfer, at the operating system layer, the first information on which UDP/IP protocol processing has been performed to the UDP proxy module by using the data channel; restore, at the baseband layer, the first information by using the UDP proxy module; and send the first information from the baseband layer to the network-side device by using the RRC signaling.

Optionally, the sending module 302 is specifically configured to: transfer, at the operating system layer, the first information to the baseband layer by using the AT command; and send the first information from the baseband layer to the network-side device by using the RRC signaling.

An implementation is shown in FIG. 3-6. In FIG. 3-6, the RAC module 301 is an independent application module at the application layer, and is configured to obtain parameter information of all applications at the application layer. Similarly, in the figure, for example, there are only two applications at the application layer. The sending module 302 is specifically configured to: transfer, by using the RAC module, the first information to the operating system layer through an application programming interface API at the application layer; transfer, at the operating system layer, the first information to the baseband layer by using the AT command; and send the first information from the baseband layer to the network-side device by using the RRC signaling.

In some other embodiments of the present invention, the RAC module 301 is located at the operating system layer.

The RAC module 301 is specifically configured to obtain the first information from the application layer by using the API interface.

The sending module 302 is specifically configured to: transfer, at the operating system layer, the first information to the baseband layer by using a data channel; and send the first information from the baseband layer to the network-side device by using the DRB corresponding to the air interface.

An implementation is shown in FIG. 3-7. The RAC module 301 is specifically configured to obtain the first information from the application layer by using the API interface; transfer, at the operating system layer, the first information to the baseband layer by using a data channel; and directly send the first information from the baseband layer to the network-side device by using the DRB corresponding to the air interface.

In some other embodiments of the present invention, the RAC module 301 is located at the operating system layer.

An implementation is shown in FIG. 3-8. The RAC module 301 is specifically configured to obtain the first information from the application layer by using the API interface. The sending module 302 is specifically configured to: transfer, at the operating system layer, the first information to the baseband layer by using an AT command; and send the first information from the baseband layer to the network-side device by using the RRC signaling.

In some other embodiments of the present invention, the RAC module 301 is located at the baseband layer.

The RAC module 201 is configured to obtain the first information from the application layer by using a cross-layer interface between the application layer and the baseband layer. The cross-layer interface is used for direct data exchange between the baseband layer and the application layer.

Alternatively, the operating system layer obtains the first information from the application layer by using the API interface.

The RAC module 301 is specifically configured to obtain the first information from the operating system layer by using an AT command.

The sending module 302 is specifically configured to send, at the baseband layer, the first information to the network-side device by using the RRC signaling.

An implementation is shown in FIG. 3-9. At the baseband layer, the RAC module obtains the first information. There are a plurality of manners for obtaining the first information. In one manner, the first information is transferred from the application layer to the baseband layer by using the cross-layer interface used for direct data exchange between the application layer and the baseband layer. Specifically, the RAC module 201 obtains the first information from the application layer by using the cross-layer interface, and then, the sending module 302 sends, at the baseband layer, the first information to the network-side device by using the RRC signaling. In another manner, the cross-layer interface between the application layer and the baseband layer is not used, and a conventional manner is used instead. That is, existing data transmission manners used at the application layer, the operating system layer, and the baseband layer are separately used. Specifically, the operating system layer obtains the first information from the application layer by using the API interface; the RAC module 301 at the baseband layer obtains the first information from the operating system layer by using the AT command; and then, the sending module 302 sends, at the baseband layer, the first information to the network-side device by using the RRC signaling.

Optionally, in the foregoing embodiment, the RAC module 301 is further configured to obtain transport layer parameter information of the UE. The first information further includes the transport layer parameter information of the UE.

Optionally, the user equipment further includes:
a receiving module, configured to receive application parameter adjustment information sent by the network-side device, where the application parameter adjustment information may be sent by the network-side device after the network-side device parses and adjusts the first information; and
an adjustment module, configured to adjust an application operation of the UE according to the application parameter adjustment information.

For example, a transmit end UE may send, to a network-side device eNB by using RRC signaling or a data transmission bearer DRB, voice service information determined by the transmit end UE and a receive end UE by negotiation, and the voice service information includes a transmission rate of a voice service, transmitted redundant information of the voice service, framing information of the voice service, or the like. Then, the eNB adjusts the voice service information of the UE according to channel state information and a load of the eNB. For example, if the eNB is heavily loaded or channel quality is not good, the eNB may request the UE to reduce the transmission rate of the voice service, and then, the eNB returns adjusted parameter information to the UE for processing.

The following describes an embodiment of a network-side device in the embodiments of the present invention.

Referring to FIG. 4-1, an embodiment of a network-side device 400 in the embodiments of the present invention includes:
an obtaining module 401, configured to obtain first information from UE by using RRC signaling or a DRB bearer, where the first information includes application layer parameter information of the UE;
a RAC module 402, configured to parse the first information; and
a processing module 403, configured to: adjust the parsed first information according to a current network status to obtain adjusted application layer parameter information, and feed back the adjusted application layer parameter information to the UE by using RRC signaling or a DRB; or perform an application operation by using the first information.

The current network status may be at least one of current air interface signal quality, a network load status, or the like.

The performing, by a processing module, an application operation by using the first information may be performing, by the processing module according to the current network status, adjustment on information about a voice service supported by the user equipment, including a transmission rate of the voice service, transmitted redundant information of the voice service, framing information of the voice service, or the like. For example, when the network-side device is a base station, if the base station is heavily loaded or channel quality is not good, the processing module may reduce the transmission rate of the voice service of the user equipment, and feeds back a reduced transmission rate to the UE.

According to this embodiment of the present invention, a radio access communication RAC module, configured to obtain an application layer parameter of the UE, is disposed at an application layer, an operating system layer, or a baseband layer of the user equipment; the obtained application layer parameter is sent to the network-side device by using RRC signaling or a DRB corresponding to an air interface, so that the network-side device can obtain the application layer parameter information sent by the UE; and the network-side device performs processing or an operation according to the application layer parameter. According to this embodiment of the present invention, application layer parameter information of UE is exchanged between a network-side device and the UE, so that the network-side device can obtain an application layer parameter of a user equipment side, and perform adjustment or an operation correspondingly. This improves user experience.

In this embodiment of the present invention, the obtaining module 401 obtains the first information from the UE by using RRC signaling or a DRB bearer. This is corresponding to a manner in which the UE sends the first information to the network-side device. For example, if the UE sends the first information to the network-side device by using RRC signaling, the network-side device receives, by using the obtaining module 401, the RRC signaling sent by the UE, and transfers the received first information to the RAC module 402, and the RAC module 402 parses the first information. Similarly, if the UE sends the first information to the network-side device by using a DRB corresponding to an air interface, the network-side device receives, by using the obtaining module 401, the first information sent over the corresponding DRB bearer of the UE, and transfers the first information to the RAC module 402, and the RAC module 402 parses the first information.

Optionally, the network-side device is a base station or a mobile edge computing MEC entity.

As shown in FIG. 4-2, if the network-side device is a MEC entity, current network status information is sent by a base station to the MEC entity. That is, the MEC entity is further configured to receive the current network status information sent by the base station.

In a dual connectivity (DC, Dual Connectivity) scenario, the UE may simultaneously perform data transmission with two base stations (a master eNodeB MeNB and a secondary eNodeB SeNB). Specifically, in the DC scenario, the UE first randomly accesses the MeNB, then, the UE performs radio resource management (Radio Resource Management, RRM) measurement and reporting according to a measurement configuration of the MeNB, and the MeNB configures the SeNB as a secondary eNodeB for the UE according to measurement and reporting results of the UE. In this way, the UE can simultaneously communicate with the two base stations. In the DC scenario, no handover occurs, provided that the UE moves within a coverage area of the MeNB.

In a dual connectivity (DC, Dual Connectivity) scenario, in this embodiment of the present invention, the network-side device is the master eNodeB MeNB. The master eNodeB MeNB sends the received first information to the secondary eNodeB SeNB by using an X2 interface (an interface between the master eNodeB and the secondary eNodeB, used for signaling and data exchange between the master eNodeB MeNB and the secondary eNodeB SeNB). In one manner, the secondary eNodeB SeNB adjusts the first information according to the current network status to obtain application parameter adjustment information, and sends the adjusted application adjustment information to the master eNodeB MeNB by using the X2 interface, and the master eNodeB MeNB feeds back the adjusted application layer parameter information to the UE by using RRC signaling or a DRB. In another manner, the secondary eNodeB SeNB performs an application operation by using the first information.

In an embodiment of the present invention, a communications system is further provided, including user equipment, a master eNodeB, and a secondary eNodeB. The master eNodeB and the secondary eNodeB are able to simultaneously serve the user equipment, and there is an X2 interface between the master eNodeB and the secondary eNodeB, used for exchanging signaling and data.

The user equipment is the user equipment according to any one of the foregoing embodiments.

The master eNodeB obtains first information that is sent by using RRC signaling or a DRB by the user equipment, and sends the first information to the secondary eNodeB by using the X2 interface.

The secondary eNodeB adjusts the first information according to a current network status to obtain adjusted application parameter information, and sends the adjusted application parameter information to the master eNodeB by using the X2 interface.

The master eNodeB feeds back the adjusted application parameter information to the UE by using RRC signaling or a DRB.

Alternatively, the secondary eNodeB performs an application operation by using the first information.

A specific process of performing, by the secondary eNodeB, an application operation by using the first information is similar to that of performing, by the processing module, an application operation by using the first information in the embodiment shown in FIG. 4. Details are not repeated herein.

The following describes an embodiment of a method for sending application layer parameter information in the embodiments of the present invention.

Referring to FIG. 5, a method for sending application layer parameter information according to an embodiment of the present invention includes the following steps.

501. The UE obtains first information, where the first information includes application layer parameter information of the UE.

The UE may include a radio-access-network access communication RAC module. The RAC module is located at an application layer, an operating system layer, or a baseband layer of the UE, and the RAC module is configured to obtain the first information.

502. The UE sends the first information to the network-side device by using RRC signaling or a DRB.

According to this embodiment of the present invention, the user equipment may obtain an application layer parameter of the UE, and send the obtained application layer parameter to the network-side device by using RRC signaling or a DRB corresponding to an air interface, so that the network-side device performs processing or an operation according to the application layer parameter. According to this embodiment of the present invention, application layer parameter information of UE is exchanged between a network-side device and the UE, so that the network-side device can obtain an application layer parameter of a user equipment side, and perform adjustment or an operation correspondingly. This improves user experience.

In some embodiments of the present invention, the RAC module may be located at the application layer.

In this case, the sending, by the UE, the first information to the network-side device includes:
transferring, by the UE by using the RAC module, the first information to the operating system layer through the API interface; and
transferring, by the UE at the operating system layer, the first information to the baseband layer by using an AT command or a data channel; and sending the first information from the baseband layer to the network-side device by using the RRC signaling or a DRB corresponding to an air interface.

Optionally, the transferring, by the UE at the operating system layer, the first information to the baseband layer by using an AT command or a data channel; and sending the first information from the baseband layer to the network-side device may include:
transferring, by the UE at the operating system layer, the first information on which Transmission Control Protocol/Internet Protocol TCP/IP processing has been performed to the baseband layer by using the data channel; and sending the first information from the baseband layer to the network-side device by using the DRB corresponding to the air interface.

Optionally, the baseband layer may include a TCP proxy module.

In this case, the transferring, by the UE at the operating system layer, the first information to the baseband layer by using an AT command or a data channel; and sending the first information from the baseband layer to the network-side device includes:
transferring, by the UE at the operating system layer, the first information on which TCP/IP protocol processing has been performed to the TCP proxy module by using the data channel; and
restoring, by the UE at the baseband layer, the first information by using the TCP proxy module; and sending the first information from the baseband layer to the network-side device by using the RRC signaling.

Optionally, the transferring, by the UE at the operating system layer, the first information to the baseband layer by using an AT command or a data channel; and sending the first information from the baseband layer to the network-side device may include:
transferring, by the UE at the operating system layer, the first information on which User Datagram Protocol/Internet Protocol UDP/IP processing has been performed to the baseband layer by using the data channel; and multicasting the first information from the baseband layer to the network-side device by using the DRB corresponding to the air interface.

Optionally, the baseband layer may include a UDP proxy module.

In this case, the transferring, by the UE at the operating system layer, the first information to the baseband layer by using an AT command or a data channel; and sending the first information from the baseband layer to the network-side device includes:
transferring, by the UE at the operating system layer, the first information on which UDP/IP protocol processing has been performed to the UDP proxy module by using the data channel; and
restoring, by the UE at the baseband layer, the first information by using the UDP proxy module; and sending the first information from the baseband layer to the network-side device by using the RRC signaling.

Optionally, the transferring, by the UE at the operating system layer, the first information to the baseband layer by using an AT command or a data channel; and sending the first information from the baseband layer to the network-side device includes:
transferring, by the UE at the operating system layer, the first information to the baseband layer by using the AT command; and sending the first information from the baseband layer to the network-side device by using the RRC signaling.

In some other embodiments of the present invention, the RAC module may alternatively be located at the operating system layer.

The obtaining, by the UE, the first information by using the RAC module includes:
obtaining, by the RAC module, the first information from the application layer by using the API interface.

The sending, by the UE, the first information to the network-side device includes:
transferring, by the UE at the operating system layer, the first information to the baseband layer by using a data channel; and sending the first information from the baseband layer to the network-side device by using a DRB corresponding to an air interface.

In some other embodiments of the present invention, the RAC module may alternatively be located at the operating system layer.

The obtaining, by the UE, the first information by using the RAC module includes:
obtaining, by the RAC module, the first information from the application layer by using the API interface; and
The sending, by the UE, the first information to the network-side device includes:
transferring, by the UE at the operating system layer, the first information to the baseband layer by using an AT command; and sending the first information from the baseband layer to the network-side device by using the RRC signaling.

In some other embodiments of the present invention, the RAC module may alternatively be located at the baseband layer.

The obtaining, by the UE, the first information by using the RAC module includes:
obtaining, by the RAC module, the first information from the application layer by using a cross-layer interface between the application layer and the operating system layer, where the cross-layer interface is used for direct data exchange between the baseband layer and the application layer.

Alternatively, the obtaining, by the UE, the first information by using the RAC module includes:
obtaining, by the UE at the operating system layer, the first information from the application layer by using the API interface; and
obtaining, by the RAC module, the first information from the operating system layer by using an AT command.

The sending, by the UE, the first information to the network-side device includes:
sending, by the UE at the baseband layer, the first information to the network-side device by using the RRC signaling.

In the foregoing embodiment, optionally, the RAC module is further configured to obtain transport layer parameter information of the UE. The first information may further include the transport layer parameter information of the UE.

In the foregoing embodiment, optionally, the method may further include:
receiving, by the UE, application parameter adjustment information sent by the network-side device; and
adjusting, by the UE, an application operation of the UE according to the application parameter adjustment information.

The following describes a method for receiving application layer parameter information according to the embodiments of the present invention.

Referring to FIG. 6, an embodiment of the method for receiving application layer parameter information in the embodiments of the present invention includes the following steps:
601. The network-side device obtains first information from UE by using RRC signaling or a DRB, where the first information includes application layer parameter information of the UE.
602. The network-side device parses the first information.
603. The network-side device adjusts the parsed first information according to a current network status to obtain application parameter adjustment information, and feeds back the adjusted application layer parameter information to the UE.

Referring to FIG. 7, another embodiment of the method for receiving application layer parameter information in the embodiments of the present invention includes the following steps:
701. The network-side device obtains first information from UE by using RRC signaling or a DRB, where the first information includes application layer parameter information of the UE.
702. The network-side device parses the first information.
703. The network-side device performs an application operation by using the first information.

In the embodiments in FIG. 6 and FIG. 7, the network-side device may include a RAC module, and the RAC module is configured to parse the first information.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

An embodiment of the present invention further provides a computer storage medium. The computer storage medium may store a program. The program includes at least some or all steps of the method for sending application layer parameter information or the method for receiving application layer parameter information in the foregoing method embodiments.

In the foregoing embodiments, the description of each embodiment has respective focuses. For a part that is not described in detail in an embodiment, reference may be made to related descriptions in other embodiments.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be indirect couplings or communication connections between some interfaces, apparatuses or units, and may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions of the embodiments.

In addition, functional units in the embodiments of the present invention may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or some of the technical solutions may be implemented in the form of a software product. The software product is stored in a storage medium and includes several instructions for instructing a computer device (which may be a personal computer, a server, a network device, or the like) to perform all or some of the steps of the methods described in the embodiments of the present invention. The foregoing storage medium includes any medium that can store program code, such as a USB flash drive, a removable hard disk, a read-only memory (ROM, Read-Only Memory), a random access memory (RAM, Random Access Memory), a magnetic disk, or an optical disc.

The foregoing embodiments are merely intended for describing the technical solutions of the present invention, but not for limiting the present invention. Although the present invention is described in detail with reference to the foregoing embodiments, a person of ordinary skill in the art should understand that they may still make modifications to the technical solutions described in the foregoing embodiments or make equivalent replacements to some technical features thereof, without departing from the spirit and scope of the technical solutions of the embodiments of the present invention.

## Claims

1. User equipment, comprising a radio-access-network access communication RAC module and a sending module, wherein the RAC module is located at an application layer, an operating system layer, or a baseband layer of the UE;
the RAC module is configured to obtain first information, wherein the first information comprises application layer parameter information of the user equipment UE; and
the sending module is configured to send the first information obtained by the RAC module to the network-side device by using radio resource control RRC signaling or a data radio bearer DRB corresponding to an air interface.

2. The user equipment according to claim 1, wherein
the RAC module is located at the application layer; and
the sending module is specifically configured to: transfer, by using the RAC module, the first information to the operating system layer through an application programming interface API between the application layer and the operating system layer; transfer, at the operating system layer, the first information to the baseband layer by using an AT command or a data channel; and send the first information from the baseband layer to the network-side device by using the RRC signaling or the DRB corresponding to the air interface.

3. The user equipment according to claim 2, wherein
the sending module is specifically configured to: transfer, at the operating system layer, the first information on which Transmission Control Protocol/Internet Protocol TCP/IP processing has been performed to the baseband layer by using the data channel; and send the first information from the baseband layer to the network-side device by using the DRB corresponding to the air interface.

4. The user equipment according to claim 2, wherein
the baseband layer comprises a TCP proxy module; and
the sending module is specifically configured to: transfer, at the operating system layer, the first information on which TCP/IP protocol processing has been performed to the TCP proxy module by using the data channel; restore, at the baseband layer, the first information by using the TCP proxy module; and send the first information from the baseband layer to the network-side device by using the RRC signaling.

5. The user equipment according to claim 2, wherein
the sending module is specifically configured to: transfer, at the operating system layer, the first information on which User Datagram Protocol/Internet Protocol UDP/IP processing has been performed to the baseband layer by using the data channel; and multicast the first information from the baseband layer to the network-side device by using the DRB corresponding to the air interface.

6. The user equipment according to claim 2, wherein
the baseband layer comprises a UDP proxy module; and
the sending module is specifically configured to: transfer, at the operating system layer, the first information on which UDP/IP protocol processing has been performed to the UDP proxy module by using the data channel; restore, at the baseband layer, the first information by using the UDP proxy module; and send the first information from the baseband layer to the network-side device by using the RRC signaling.

7. The user equipment according to claim 2, wherein
the sending module is specifically configured to: transfer, at the operating system layer, the first information to the baseband layer by using the AT command; and send the first information from the baseband layer to the network-side device by using the RRC signaling.

8. The method according to any one of claims 1 to 7, wherein
a RAC module is embedded into each application at the application layer in a software manner, wherein the RAC module is configured to obtain parameter information of the corresponding application; or
the RAC module is an independent application module at the application layer, and is configured to obtain parameter information of all applications at the application layer.

9. The user equipment according to claim 1, wherein
the RAC module is located at the operating system layer;
the RAC module is specifically configured to obtain the first information from the application layer by using the API interface; and
the sending module is specifically configured to: transfer, at the operating system layer, the first information to the baseband layer by using a data channel; and send the first information from the baseband layer to the network-side device by using the DRB corresponding to the air interface.

10. The user equipment according to claim 1, wherein
the RAC module is located at the operating system layer;
the RAC module is specifically configured to obtain the first information from the application layer by using the API interface; and
the sending module is specifically configured to: transfer, at the operating system layer, the first information to the baseband layer by using an AT command; and send the first information from the baseband layer to the network-side device by using the RRC signaling.

11. The user equipment according to claim 1, wherein
the RAC module is located at the baseband layer;
the RAC module is configured to obtain the first information from the application layer by using a cross-layer interface between the application layer and the baseband layer, wherein the cross-layer interface is used for direct data exchange between the baseband layer and the application layer; or
the operating system layer obtains the first information from the application layer by using the API interface, and
the RAC module is specifically configured to obtain the first information from the operating system layer by using an AT command; and
the sending module is specifically configured to send, at the baseband layer, the first information to the network-side device by using the RRC signaling.

12. The user equipment according to any one of claims 1 to 11, wherein
the RAC module is further configured to obtain transport layer parameter information of the UE; and
the first information further comprises the transport layer parameter information of the UE.

13. The user equipment according to any one of claims 1 to 12, wherein
the user equipment further comprises:
a receiving module, configured to receive adjusted application layer parameter information sent by the network-side device; and
an adjustment module, configured to adjust an application operation of the UE according to the adjusted application layer parameter information.

14. A network-side device, comprising:
an obtaining module, configured to obtain first information from UE by using RRC signaling or a DRB bearer, wherein the first information comprises application layer parameter information of the UE;
a RAC module, configured to parse the first information; and
a processing module, configured to: adjust the parsed first information according to a current network status to obtain adjusted application layer parameter information, and feed back the adjusted application layer parameter information to the UE by using RRC signaling or a DRB; or perform an application operation by using the first information.

15. The method according to claim 14, wherein the network-side device is a base station or a mobile edge computing MEC entity.

16. A method for sending application layer parameter information, wherein the method comprises:
obtaining, by the UE, first information, wherein the first information comprises application layer parameter information of the UE; and
sending, by the UE, the first information to the network-side device by using RRC signaling or a DRB.

17. The method according to claim 16, wherein
the UE comprises a radio-access-network access communication RAC module, the RAC module is located at an application layer, an operating system layer, or a baseband layer of the UE, and the RAC module is configured to obtain the first information.

18. The method according to claim 17, wherein
the RAC module is located at the application layer; and
the sending, by the UE, the first information to the network-side device comprises:
transferring, by the UE by using the RAC module, the first information to the operating system layer through an API interface between the application layer and the operating system layer; and
transferring, by the UE at the operating system layer, the first information to the baseband layer by using an AT command or a data channel; and sending the first information from the baseband layer to the network-side device by using the RRC signaling or a DRB corresponding to an air interface.

19. The method according to claim 18, wherein the transferring, by the UE at the operating system layer, the first information to the baseband layer by using an AT command or a data channel; and sending the first information from the baseband layer to the network-side device comprises:
transferring, by the UE at the operating system layer, the first information on which Transmission Control Protocol/Internet Protocol TCP/IP processing has been performed to the baseband layer by using the data channel; and sending the first information from the baseband layer to the network-side device by using the DRB corresponding to the air interface.

20. The method according to claim 18, wherein
the baseband layer comprises a TCP proxy module; and
the transferring, by the UE at the operating system layer, the first information to the baseband layer by using an AT command or a data channel; and sending the first information from the baseband layer to the network-side device comprises:
transferring, by the UE at the operating system layer, the first information on which TCP/IP protocol processing has been performed to the TCP proxy module by using the data channel; and
restoring, by the UE at the baseband layer, the first information by using the TCP proxy module; and sending the first information from the baseband layer to the network-side device by using the RRC signaling.

21. The method according to claim 18, wherein
the transferring, by the UE at the operating system layer, the first information to the baseband layer by using an AT command or a data channel; and sending the first information from the baseband layer to the network-side device comprises:
transferring, by the UE at the operating system layer, the first information on which User Datagram Protocol/Internet Protocol UDP/IP processing has been performed to the baseband layer by using the data channel; and multicasting the first information from the baseband layer to the network-side device by using the DRB corresponding to the air interface.

22. The method according to claim 18, wherein
the baseband layer comprises a UDP proxy module; and
the transferring, by the UE at the operating system layer, the first information to the baseband layer by using an AT command or a data channel; and sending the first information from the baseband layer to the network-side device comprises:
transferring, by the UE at the operating system layer, the first information on which UDP/IP protocol processing has been performed to the UDP proxy module by using the data channel; and
restoring, by the UE at the baseband layer, the first information by using the UDP proxy module; and sending the first information from the baseband layer to the network-side device by using the RRC signaling.

23. The method according to claim 18, wherein
the transferring, by the UE at the operating system layer, the first information to the baseband layer by using an AT command or a data channel; and sending the first information from the baseband layer to the network-side device comprises:
transferring, by the UE at the operating system layer, the first information to the baseband layer by using the AT command; and sending the first information from the baseband layer to the network-side device by using the RRC signaling.

24. The method according to claim 17, wherein
the RAC module is located at the operating system layer;
the obtaining, by the UE, the first information by using the RAC module comprises:
obtaining, by the RAC module, the first information from the application layer by using the API interface; and
the sending, by the UE, the first information to the network-side device comprises:
transferring, by the UE at the operating system layer, the first information to the baseband layer by using a data channel; and sending the first information from the baseband layer to the network-side device by using a DRB corresponding to an air interface.

25. The method according to claim 17, wherein
the RAC module is located at the operating system layer;
the obtaining, by the UE, the first information by using the RAC module comprises:
obtaining, by the RAC module, the first information from the application layer by using the API interface; and
the sending, by the UE, the first information to the network-side device comprises:
transferring, by the UE at the operating system layer, the first information to the baseband layer by using an AT command; and sending the first information from the baseband layer to the network-side device by using the RRC signaling.

26. The method according to claim 17, wherein
the RAC module is located at the baseband layer;
the obtaining, by the UE, the first information by using the RAC module comprises:
obtaining, by the RAC module, the first information from the application layer by using a cross-layer interface between the application layer and the baseband layer, wherein the cross-layer interface is used for direct data exchange between the baseband layer and the application layer; or
the obtaining, by the UE, the first information by using the RAC module comprises:
obtaining, by the UE at the operating system layer, the first information from the application layer by using the API interface, and
obtaining, by the RAC module, the first information from the operating system layer by using an AT command; and
the sending, by the UE, the first information to the network-side device comprises:
sending, by the UE at the baseband layer, the first information to the network-side device by using the RRC signaling.

27. The method according to any one of claims 17 to 26, wherein the RAC module is further configured to obtain transport layer parameter information of the UE; and
the first information further comprises the transport layer parameter information of the UE.

28. The method according to any one of claims 16 to 27, wherein
the method further comprises:
receiving, by the UE, adjusted application layer parameter information sent by the network-side device; and
adjusting, by the UE, an application operation of the UE according to the adjusted application layer parameter information.

29. A method for receiving application layer parameter information, wherein the method comprises:
obtaining, by the network-side device, first information from UE by using RRC signaling or a DRB, wherein the first information comprises application layer parameter information of the UE;
parsing, by the network-side device, the first information; and
adjusting, by the network-side device, the parsed first information according to a current network status to obtain adjusted application layer parameter information, and feeding back the adjusted application layer parameter information to the UE; or performing, by the network-side device, an application operation by using the first information.

30. The method according to claim 29, wherein
the network-side device comprises a RAC module, wherein the RAC module is configured to parse the first information.

31. A communications system, comprising user equipment, a master eNodeB, and a secondary eNodeB, wherein the master eNodeB and the secondary eNodeB are able to simultaneously serve the user equipment, and there is an X2 interface between the master eNodeB and the secondary eNodeB, used for exchanging signaling and data;
the user equipment is the user equipment according to any one of claims 1 to 13;
the master eNodeB obtains first information that is sent by using RRC signaling or a DRB by the user equipment, and sends the first information to the secondary eNodeB by using the X2 interface; and
the secondary eNodeB adjusts the first information according to a current network status to obtain adjusted application parameter information, and sends the adjusted application parameter information to the master eNodeB by using the X2 interface, and
the master eNodeB feeds back the adjusted application parameter information to the UE by using RRC signaling or a DRB; or
the secondary eNodeB performs an application operation by using the first information.
